# EUROPÄISCHE PATENTSCHRIFT

(11) **EP 3 337 707 B1**
(45) Veröffentlichungstag und Bekanntmachung des Hinweises auf die Patenterteilung: **29.09.2021**
(21) Anmeldenummer: 16781731.1
(22) Anmeldetag: 10.10.2016
(51) Int. Cl.: B61C 3/02, B61C 9/48, B61C 17/06

(54) **PASSAGIERSCHIENENFAHRZEUG**
PASSENGER RAIL VEHICLE
VÉHICULE FERROVIAIRE POUR LE TRANSPORT DE PASSAGERS

(30) Priorität: 24.11.2015 AT 509992015
(43) Veröffentlichungstag der Anmeldung: 27.06.2018
(73) Patentinhaber: Siemens Mobility Austria GmbH, 1210 Wien (AT)
(72) Erfinder: EINGANG, Robert, 1230 Wien (AT); SCHABBAUER, Werner, 7082 Donnerskirchen (AT); WINKLER, Paul, 1020 Wien (AT); GROBBAUER, Harald, 8141 Unterpremstätten (AT); SCHMEJA, Georg, 8020 Graz (AT); STEINACHER, Mario, 8682 Hönigsberg (AT); SCHRANK, Erwin, 8212 Pischelsdorf (AT)
(74) Vertreter: Deffner, Rolf
(86) Internationale Anmeldenummer: PCT/EP2016/074185
(87) Internationale Veröffentlichungsnummer: WO 2017/089021

(56) Entgegenhaltungen:
- DE-A1- 4 442 515
- DE-A1- 4 445 571
- DE-A1-102007 041 749
- DE-A1-102012 010 365

## Beschreibung

### Technisches Gebiet

Die Erfindung betrifft ein Passagierschienenfahrzeug, insbesondere einen Reisezugwagen.

### Stand der Technik

Schienenfahrzeuge für den Personentransport werden im Allgemeinen zu Zügen zusammengestellt und von einer Lokomotive gezogen. Alternativ dazu werden sogenannte Triebzüge eingesetzt, welche über den Zug verteilte angetriebene Drehgestelle umfassen. Triebzüge weisen einen deutlich komplexeren Aufbau auf und werden hauptsächlich bei Hochgeschwindigkeitsbahnen eingesetzt. Eine Anpassung an unterschiedliches Passagieraufkommen kann durch eine Änderung der Zahl an Passagierwaggons eines Zuges vorgenommen werden. Bei Triebzügen ist eine solche Änderung nur unter sehr hohem Aufwand möglich, sodass die im praktischen Betrieb einzige Möglichkeit in der Kupplung zweier Triebzüge besteht. Dies ergibt eine extrem grobe Stufung der Passagierkapazität und ist dadurch unwirtschaftlich. Bei konventionellen, lokbespannten Zügen kann eine Variation der Passagierkapazität wesentlich einfacher und dabei feiner gestuft vorgenommen werden. Dazu werden einzelne Wagen dem Zugverband hinzugefügt oder entnommen. Für die dazu erforderlichen Rangierarbeiten werden Rangierlokomotiven eingesetzt, welche in großen Bahnhöfen praktisch immer vorhanden sind, zu kleineren Bahnhöfen allerdings erst zugefahren werden müssten. Dadurch ergeben sich Mängel im Bahnbetrieb, da beispielsweise zu viele Wagen in einem Zugverband im Einsatz sind, welche in anderen Zügen gebraucht werden würden.

Aus dem Stand der Technik ist bekannt, einen elektrischen Fahrantrieb bei einer Beschädigung desselben von einer Achse abkoppeln zu können, sodass eine Weiterfahrt oder Abschleppung des Fahrzeugs ermöglicht wird. Die Anmeldeschrift DE 10 2007 041 749 A1 offenbart dazu ein mit einem Deckel ausgestattetes Getriebegehäuse, welches die Demontage eines Motorritzels erlaubt, sodass ein blockierter Motor nicht, ggf. auf freier Strecke, ausgebaut werden muß.

### Darstellung der Erfindung

Der Erfindung liegt daher die Aufgabe zugrunde, ein Passagierschienenfahrzeug anzugeben, welches zum Rangieren keiner Rangierlokomotive bedarf.

Die Aufgabe wird durch ein Passagierschienenfahrzeug mit den Merkmalen des Anspruchs 1 gelöst. Vorteilhafte Ausgestaltungen sind Gegenstand untergeordneter Ansprüche.

Dem Grundgedanken der Erfindung nach wird ein Passagierschienenfahrzeug beschrieben, welches einen Akkumulator und einen Kraftantrieb umfasst, welcher auf eine Achswelle des Passagierschienenfahrzeugs wirkt und wobei der Kraftantrieb zur Übertragung seiner Antriebskraft an die Achswelle mittels eines Zahnradgetriebes eingerichtet ist und wobei die Energie zum Betrieb des Kraftantriebs dem Akkumulator entnommen wird und wobei der Kraftfluß des Kraftantriebs zu der Achswelle mechanisch abkoppelbar ist.

Dadurch ist der Vorteil erzielbar, das

Passagierschienenfahrzeug rangieren zu können ohne dass dazu einer Rangierlokomotive erforderlich ist.

Erfindungsgemäß ist das Passagierschienenfahrzeug mit einem Kraftantrieb ausgestattet, welcher über ein Zahnradgetriebe auf eine der Achsen des Fahrzeugs wirkt und wobei der Kraftfluß zwischen dem Kraftantrieb und der angetriebenen Achse unterbrechbar ist. Dies ist wesentlich, da der Kraftantrieb für geringe Geschwindigkeiten (typischerweise 10km/h) ausgelegt ist und der Antriebsmotor dadurch bei Reisegeschwindigkeit eine zu hohe Drehzahl erlangen würde. Weiters wird durch diese Auskupplung das Zahnradgetriebe geschont, da es nur bei Rangierfahrten in Verwendung ist.

In einer bevorzugten Ausführungsform der Erfindung ist zur Abkopplung des Kraftantriebs ein Zahnrad radial aus dem Eingriff mit einem weiteren Zahnrad schwenkbar angeordnet. Eine weitere bevorzugte Ausführungsform der Erfindung sieht vor, dass zur Abkopplung des Kraftantriebs ein Zahnrad axial aus dem Eingriff mit einem weiteren Zahnrad schiebbar angeordnet ist.

Für beide genannten Ausführungsformen zur Abkopplung des Kraftantriebs ist ein weiterer Kraftantrieb vorgesehen, welcher die erforderlichen Schwenk- bzw. Schiebebewegungen ausführt. Solcherart ist sichergestellt, dass der Antrieb zum Rangieren des Fahrzeugs rasch und ohne manuelle Eingriffe ein- und ausgekoppelt werden kann. Für den Fall des Versagens dieses weiteren Kraftantriebs, bzw. für den Fall eines Energieverlusts in dem Fahrzeug ist es empfehlenswert eine manuelle Notbetätigung zur Durchführung der Ein- und Auskuppelvorgänge vorzusehen. Dies ist insbesondere vorteilhaft, da ein Fahrzeug mit eingekuppeltem Kraftantrieb nicht in einem Zugverbund fahrbar ist, da dabei aufgrund der Geschwindigkeit die maximale Drehzahl des Kraftantriebs überschritten werden würde.

Zum Betrieb des Kraftantriebs wird erfindungsgemäß die in der Fahrzeugbatterie gespeicherte elektrische Energie verwendet, sodass keine Stromabnehmer erforderlich sind und somit auch ein Rangierbetrieb auf nicht elektrifizierten Gleisabschnitten möglich ist. Die in Passagierschienenfahrzeugen für allgemeine Zwecke wie Beleuchtung, Sicherheitstechnik oder Belüftung eingesetzten Akkumulatoren weisen typischerweise eine für diesen Anwendungsfall ausreichende Kapazität auf. Diese Kapazität ist ausreichend um das Fahrzeug über die bei Rangiervorgängen in Bahnhöfen typischen Strecken, auch bei Steigungen, rangieren zu können. Bei ebener Streckenführung können bis zu 5 km erzielt werden. Dies ist insbesondere deshalb gut möglich, da bei sich in Bewegung befindlichen Schienenfahrzeugen nur der geringe Rollwiderstand überwunden werden muß. Der höchste Leistungsbedarf ist im Anfahrmoment gegeben, wenn das Losbrechmoment der stehenden Achsen überwunden werden muß.

Als Kraftantrieb ist bevorzugt ein Elektromotor einzusetzen, welcher über einen Leistungsumrichter aus der Fahrzeugbatterie versorgt wird. Alternativ dazu kann auch ein hydraulischer Motor eingesetzt werden, wozu jedoch an geeigneter Stelle eine Hydraulikpumpe vorzusehen ist. Dies kann vorteilhaft sein, wenn beengte Platzverhältnisse im Drehgestell des Passagierschienenfahrzeugs das Vorsehen eines Elektromotors nicht erlauben.

Eine bevorzugte Ausführungsform der Erfindung sieht vor, den Kraftantrieb an jenen Festpunkten an einem Drehgestell anzuordnen, die für einen Bremssattel einer Scheibenbremse vorgesehen sind und an der anzutreibenden Achswelle ein Zahnrad an jener Einbauposition anzuordnen die für eine Bremsscheibe vorgesehen ist. Solcherart ist der Vorteil erzielbar, ein antriebsloses Passagierschienenfahrzeug sehr einfach mit einem Kraftantrieb ausstatten zu können, da an den Drehgestellen, insbesondere am Drehgestellrahmen und der Federung keinerlei Änderungen vorgenommen werden müssen. Die Änderungen umfassen nur die Montage eines Zahnrades an der Einbauposition einer Bremsscheibe, der Montage des Kraftantriebs mit dem Zahnradgetriebe und der Ein/Auskuppeleinrichtung und zugehöriger elektrischer oder hydraulischer Leitungsführung. Dadurch ist es möglich, einen Umbausatz für bestehende Fahrzeuge zu schaffen, welcher die erforderlichen Baugruppen umfasst, mittels welchem bestehende Fahrzeuge nachgerüstet werden können.

Der Entfall einer Bremsscheibe eines Fahrzeugs ist im Allgemeinen problemlos möglich, da die Bremsleistung dadurch nur sehr gering reduziert wird und jedenfalls oberhalb der Forderungen für eine Fahrzeugzulassung bleibt. Ein typischer 4achsiger Reisezugwagen ist je Achse mit 3 Bremsscheiben ausgestattet, sodass ein Entfall einer dieser 12 Bremsscheiben die Bremsleistung des gesamten Wagens nur gering beeinträchtigt.

Es ist vorteilhaft, eine Steuereinrichtung vorzusehen, mittels welcher die Drehrichtung und die Drehzahl des Kraftantriebs vorgebbar sind und welche den Ein- und Auskuppelvorgang des Zahnradgetriebes steuert. Solcherart kann, ähnlich wie mit einem Notsteuerpult eines vollautomatischen Schienenfahrzeugs ein Rangierbetrieb ermöglicht werden. Mittels dieser Steuereinrichtung wird eine Leistungselektronik (Umrichter) angesteuert, welche aus der Fahrzeugbatterie die für den Betrieb des Kraftantriebs erforderliche Spannungsform generiert. Weiters sind die Bremsen des Fahrzeugs von der Steuereinrichtung aus zu bedienen und es ist des Weiteren empfehlenswert Sicherheitseinrichtungen (z.B. Totmanneinrichtung) in die Steuereinrichtung zu integrieren. Zur Bedienung der Steuereinrichtung können beispielsweise kleine Fahrpulte im Stirnbereich des Passagierschienenfahrzeugs, beispielsweise in der Nähe des Wagenübergangs vorgesehen werden, welche bei Nichtgebrauch durch eine Abdeckung verschlossen sind. Alternativ dazu können mobile Bediengeräte eingesetzt werden, welche an einer Steckverbindung im Stirnbereich mit der Fahrzeugelektronik verbindbar. Dadurch kann der Installationsaufwand in dem Fahrzeug verringer werden, da die Bedienelemente der Steuereinrichtung pro Fahrzeug nur einmal vorhanden sein müssen und der Aufwand für die kleinen Fahrpulte im Stirnbereich entfallen kann.

In weiterer Fortbildung der Erfindung ist es empfehlenswert, das Passagierschienenfahrzeug mit einer Einrichtung zur Steuerung eines Zugverbunds aus mehreren Fahrzeugen, welche jeweils einen erfindungsgemäßen Rangierantrieb umfassen auszustatten. Dadurch ist der Vorteil erzielbar, die Rangierzeit beim Rangieren mehrerer Wagen, insbesondere ganzer Zugteile, verkürzen zu können. Dazu sind die Fahrzeuge mit einem Steuerbus auszustatten, mittels welchem eine einzige Steuereinrichtung alle Antriebe und Bremsen eines solchen Zugverbunds steuern kann. Dadurch gelingt es, mittels eines einzigen Fahrzeugführers eine prinzipiell beliebige Anzahl von gekuppelten erfindungsgemäßen Fahrzeugen gemeinsam rangieren zu können. Bei einer ausreichenden Anzahl erfindungsgemäßer Schienenfahrzeuge mit Kraftantrieb in einem solchen Zug können auch Schienenfahrzeuge ohne Kraftantrieb mitbewegt werden.

### Kurzbeschreibung der Zeichnungen

Es zeigen beispielhaft:
- **Fig.1**: Passagierschienenfahrzeug mit Kraftantrieb.
- **Fig.2**: Kraftantrieb mit zweistufigem Getriebe.
- **Fig.3**: Kraftantrieb gekapselt.
- **Fig.4**: Drehgestell mit Kraftantrieb.

### Ausführung der Erfindung

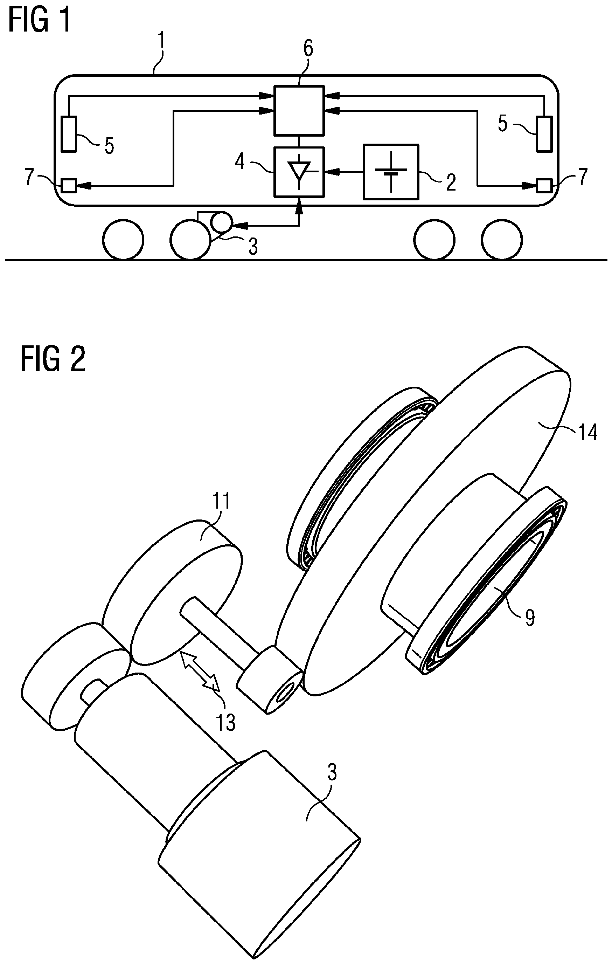

**Fig.1** zeigt beispielhaft und schematisch ein Passagierschienenfahrzeug mit einem Kraftantrieb. Es ist ein Passagierschienenfahrzeug 1 mit zwei Drehgestellen zu je zwei Achsen dargestellt, welches eine Akkumulator 2 umfasst. Eine der vier Achsen ist mit einem Kraftantrieb 3 ausgestattet, welcher zum Antrieb dieser Achse eingerichtet ist. Der Kraftantrieb 3 ist in gegenständlichem Ausführungsbeispiel als elektrischer Antrieb ausgebildet und erhält die erforderliche elektrische Energie über eine Leistungselektronik 4 aus dem Akkumulator 2. Zur Steuerung der dem Kraftantrieb zugeführten Energie ist eine Steuereinrichtung 6 vorgesehen, welche manuelle Eingaben des Fahrpersonals an einer von zwei Fahrpulten entgegennimmt und entsprechende Steuersignale an die Leistungselektronik 4 übermittelt. Weiters steuert die Steuereinrichtung 6 das Ein-und Auskuppeln des Kraftantriebs mit der angetriebenen Achse und führt weitere Kontroll- und Sicherungsaufgaben sowie das Ansteuern der Fahrzeugbremsen aus. In gezeigtem Ausführungsbeispiel ist das Passagierschienenfahrzeug 1 mit zwei Steuerschnittstellen 7 ausgestattet, über welche den Rangierfahrbetrieb steuernde Signale von weiteren Fahrzeugen an die Steuereinrichtung 6 übermittelbar sind, bzw. diese Signale an weitere gekoppelte Fahrzeuge geleitet werden können. Dadurch kann ein Zugverband aus mehreren mit je einem Kraftantrieb 3 ausgestatteten Passagierschienenfahrzeugen 1 durch Eingaben an einem Fahrpult 5 gesteuert werden.

**Fig.2** zeigt beispielhaft und schematisch einen Kraftantrieb. Es ist ein Kraftantrieb 3 mit einem zweistufigen Zahnradgetriebe 11 dargestellt. An einer Achswelle 9, in Fig.2 geschnitten dargestellt, ist ein Achswellenzahnrad 14 angeordnet auf welches das von dem Kraftantrieb 3 ausgeübte Drehmoment wirkt. Um das für ein Anfahren des Fahrzeugs erforderliche Losbrechmoment aufbringen zu können und dabei den Kraftantrieb 3 mit möglichst geringer Leistung dimensionieren zu können ist eine hohe Übersetzung ins Langsame des Zahnradgetriebes 11 erforderlich. Um Überdrehzahlen des Kraftantriebs 3 im normalen Fahrbetrieb zu vermeiden, ist eine mechanische Auskupplung des Kraftflusses zwischen dem Kraftantrieb 3 und der Achswelle 9 vorgesehen. Dazu ist eine Welle des Zahnradgetriebes 11 entlang ihrer Längsachse schiebbar gelagert, wobei ihre Zahnräder in einer ersten Endlage entlang der Kuppelbewegungsrichtung 13 in Eingriff mit dem Achswellenzahnrad 14 und dem Zahnrad an der Welle des Kraftantriebs 3 sind und in der zweiten Endlage dieser Eingriff aufgehoben ist. Die für einen kraftunterstützen oder manuellen Kuppelvorgang erforderlichen Baugruppen sind in Fig.2 zur Vereinfachung nicht dargestellt.

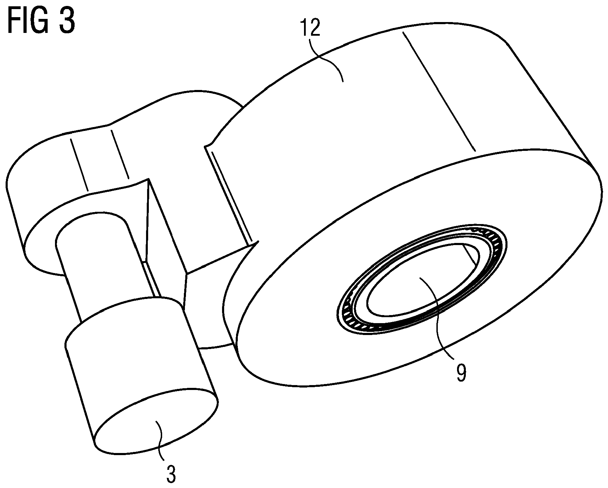

**Fig.3** zeigt beispielhaft und schematisch einen gekapselten Kraftantrieb. Es ist der Kraftantrieb 3 aus Fig.2 dargestellt, wobei die beweglichen Teile, insbesondere das Zahnradgetriebe 11 von einer Kapselung 12 umgeben und somit vor Umwelteinflüssen geschützt sind. Weiters verhindert die Kapselung 12 einen Austritt der Schmiermittel des Zahnradgetriebes 11.

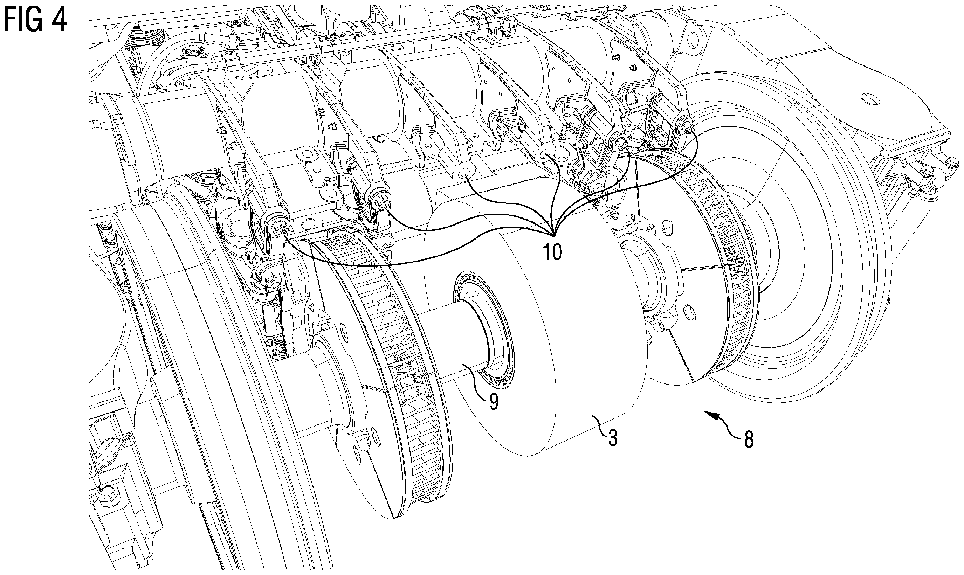

**Fig.4** zeigt beispielhaft und schematisch ein Drehgestell mit einem Kraftantrieb. Es ist ein gekapselter Kraftantrieb 3 in Einbaulage an einem Drehgestell 8 dargestellt. Das Drehgestell 8 umfasst je Achswelle 9 drei Bremsscheiben und zugehörige Bremssättel. Die Bremssättel sind am Rahmen des Drehgestells 8 an Bremssattelbefestigungspunkten 10 lösbar befestigt. Eine der drei Bremsscheiben einer Achswelle 9 ist durch ein Achswellenzahnrad 14 ersetzt auf welches der Kraftantrieb 3 wirkt. Der Kraftantrieb 3 ist an den Bremssattelbefestigungspunkten 10 lösbar befestigt, welcher der entfallenen Bremsscheibe zugeordnet sind. In Fig.5 sind zur Verdeutlichung der alleinigen Anordnung des Kraftantriebs 3 an den Bremssattelbefestigungspunkten 10 dazu diese Bremssattelbefestigungspunkte 10 nicht verdeckt dargestellt. Der Kraftantrieb 3 ist außer an den Bremssattelbefestigungspunkten 10 an keinen Stellen des Rahmens des Drehgestells 8 mit diesem verbunden.

### Liste der Bezeichnungen

- 1: Passagierschienenfahrzeug
- 2: Akkumulator
- 3: Kraftantrieb
- 4: Leistungselektronik
- 5: Fahrpult
- 6: Steuereinrichtung
- 7: Steuerschnittstelle
- 8: Drehgestell
- 9: Achswelle
- 10: Bremssattelbefestigungspunkt
- 11: Zahnradgetriebe
- 12: Kapselung
- 13: Kuppelbewegungsrichtung
- 14: Achswellenzahnrad

## Patentansprüche

1. Passagierschienenfahrzeug (1), umfassend einen elektrischen Akkumulator (2) und einen Kraftantrieb (3), welcher auf eine Achswelle (9) des Passagierschienenfahrzeugs (1) wirkt, wobei der Kraftantrieb (3) zur Übertragung seiner Antriebskraft an die Achswelle (9) mittels eines Zahnradgetriebes (11) eingerichtet ist
**dadurch gekennzeichnet, dass**
die Energie zum Betrieb des Kraftantriebs (3) dem elektrischen Akkumulator (2) entnommen wird und wobei der Kraftfluß des Kraftantriebs (3) zu der Achswelle (9) mechanisch abkoppelbar ist, wobei zur Durchführung der Ein- und Auskuppelvorgänge ein weiterer Kraftantrieb vorgesehen ist.

2. Passagierschienenfahrzeug (1) nach Anspruch 1,
**dadurch gekennzeichnet, dass** der Kraftantrieb (3) ein elektrischer Motor ist.

3. Passagierschienenfahrzeug (1) nach Anspruch 1,
**dadurch gekennzeichnet, dass** der Kraftantrieb (3) ein Hydraulikmotor ist.

4. Passagierschienenfahrzeug (1) nach einem der Ansprüche 1 bis 3,
**dadurch gekennzeichnet, dass** zur Abkopplung des Kraftantriebs (3) ein Zahnrad radial aus dem Eingriff mit einem weiteren Zahnrad schwenkbar angeordnet ist.

5. Passagierschienenfahrzeug (1) nach einem der Ansprüche 1 bis 3,
**dadurch gekennzeichnet, dass** zur Abkopplung des Kraftantriebs (3) ein Zahnrad axial aus dem Eingriff mit einem weiteren Zahnrad schiebbar angeordnet ist.

6. Passagierschienenfahrzeug (1) nach einem der Ansprüche 1 bis 5,
**dadurch gekennzeichnet, dass** das an der angetriebenen Achswelle (9) befestigte Zahnrad (14) an jener Einbauposition angeordnet ist, an welcher bei weiteren Achsenwellen (9) des Passagierschienenfahrzeugs (1) eine Bremsscheibe befestigt ist und wobei der Kraftantrieb (3) der angetriebenen Achse an jenen Festpunkten (10) angeordnet ist an welchen bei weiteren Achsen ein Bremssattel angeordnet ist.

7. Passagierschienenfahrzeug (1) nach einem der Ansprüche 1 bis 6,
**dadurch gekennzeichnet, dass** zur Durchführung der Ein-und Auskuppelvorgänge eine manuelle Notbetätigung vorgesehen ist.

8. Passagierschienenfahrzeug (1) nach einem der Ansprüche 1 bis 7,
**dadurch gekennzeichnet, dass** eine Steuereinrichtung (6) vorgesehen ist mittels welcher die Drehrichtung und die Drehzahl des Kraftantriebs (3) vorgebbar sind und welche den Ein- und Auskuppelvorgang des Zahnradgetriebes steuert.

## Claims

1. Passenger rail vehicle (1), comprising an electric accumulator (2) and a power drive (3) which acts on an axle shaft (9) of the passenger rail vehicle (1), the power drive (3) being set up for the transmission of its drive power to the axle shaft (9) by means of a gearwheel mechanism (11), **characterized in that**
the energy for the operation of the power drive (3) is removed from the electric accumulator (2), and it being possible for the power flow of the power drive (3) to the axle shaft (9) to be decoupled mechanically, a further power drive being provided to carry out the coupling and decoupling operations.

2. Passenger rail vehicle (1) according to Claim 1, **characterized in that** the power drive (3) is an electric motor.

3. Passenger rail vehicle (1) according to Claim 1, **characterized in that** the power drive (3) is a hydraulic motor.

4. Passenger rail vehicle (1) according to one of Claims 1 to 3,
**characterized in that**, in order to decouple the power drive (3), a gearwheel is arranged such that it can be pivoted radially out of the engagement with a further gearwheel.

5. Passenger rail vehicle (1) according to one of Claims 1 to 3,
**characterized in that**, in order to decouple the power drive (3), a gearwheel is arranged such that it can be pushed axially out of the engagement with a further gearwheel.

6. Passenger rail vehicle (1) according to one of Claims 1 to 5,
**characterized in that** the gearwheel (14) which is fastened to the driven axle shaft (9) is arranged at that installation position, at which a brake disc is fastened in the case of further axle shafts (9) of the passenger rail vehicle (1), and the power drive (3) of the driven axle being arranged at those fixed points (10), at which a brake calliper is arranged in the case of further axles.

7. Passenger rail vehicle (1) according to one of Claims 1 to 6,
**characterized in that** a manual emergency actuation means is provided for carrying out the coupling and decoupling operations.

8. Passenger rail vehicle (1) according to one of Claims 1 to 7,
**characterized in that** a control device (6) is provided, by means of which the rotational direction and the rotational speed of the power drive (3) can be predefined, and which control device (6) controls the coupling and decoupling operation of the gearwheel mechanism.

## Revendications

1. Véhicule ferroviaire à passagers (1), comportant un accumulateur électrique (2) et un mécanisme d'entraînement (3) qui agit sur un arbre de commande (9) du véhicule ferroviaire à passagers (1), le mécanisme d'entraînement (3) étant conçu pour transmettre sa force motrice à l'arbre de commande (9) via un engrenage (11), **caractérisé en ce que** l'énergie qui fait fonctionner le mécanisme d'entraînement (3) est soutirée à l'accumulateur électrique (2), le flux de force du moteur (3) vers l'arbre de commande (9) pouvant être suspendu mécaniquement, un mécanisme d'entraînement supplémentaire étant prévu pour réaliser les opérations d'accouplement et de désaccouplement.

2. Véhicule ferroviaire à passagers (1) selon la revendication 1, **caractérisé en ce que** le mécanisme d'entraînement (3) est un moteur électrique.

3. Véhicule ferroviaire à passagers (1) selon la revendication 1, **caractérisé en ce que** le mécanisme d'entraînement est un moteur hydraulique.

4. Véhicule ferroviaire à passagers (1) selon l'une des revendications 1 à 3,
**caractérisé en ce que**, pour désaccoupler le mécanisme d'entraînement (3), une crémaillère est disposée de manière à être pivotée radialement depuis l'engrenage avec une deuxième crémaillère.

5. Véhicule ferroviaire à passagers (1) selon l'une des revendications 1 à 3,
**caractérisé en ce que**, pour désaccoupler le mécanisme d'entraînement (3), une crémaillère est disposée de manière à être glissée axialement depuis l'engrenage avec une deuxième crémaillère.

6. Véhicule ferroviaire à passagers (1) selon l'une des revendications 1 à 5,
**caractérisé en ce que** la crémaillère (14) rapportée sur l'arbre de commande moteur (9) est disposée à l'endroit de montage où, dans d'autres arbres de commande du véhicule ferroviaire à passagers (1), un disque de frein est rapporté, et dans lequel le mécanisme d'entraînement (3) de l'axe moteur est disposé aux points fixes (10) où, dans d'autres axes, un étrier de frein est disposé.

7. Véhicule ferroviaire à passagers (1) selon l'une des revendications 1 à 6,
**caractérisé en ce que**, pour la réalisation des opérations d'accouplement et de désaccouplement, un dispositif d'arrêt d'urgence manuel est prévu.

8. Véhicule ferroviaire à passagers (1) selon l'une des revendications 1 à 7,
**caractérisé en ce qu'**un dispositif de commande (6) est prévu, permettant de prédéterminer le sens de rotation et la vitesse de rotation du mécanisme d'entraînement (3) et commandant les opérations d'engagement et de désengagement de l'engrenage.
